# EUROPÄISCHE PATENTSCHRIFT

(11) **EP 0 502 328 B1**
(45) Veröffentlichungstag und Bekanntmachung des Hinweises auf die Patenterteilung: **04.05.1994**
(21) Anmeldenummer: 92101838.8
(22) Anmeldetag: 04.02.1992
(51) Int. Cl.: B23Q 11/08

(54) **Abstreifeinrichtung für eine Teleskopabdeckung**
Scraper device for telescopic coverings
Dispositif racleur pour recouvrement télescopique

(30) Priorität: 04.03.1991 DE 9102555 U
(43) Veröffentlichungstag der Anmeldung: 09.09.1992
(73) Patentinhaber: Gebr. Hennig GmbH, D-85737 Ismaning (DE)
(72) Erfinder: Stöhr, Albert, W-8015 Markt Schwaben (DE)
(74) Vertreter: Tetzner, Volkmar, Dr.-Ing. Dr. jur.

(56) Entgegenhaltungen:
- EP-A- 0 290 822
- WO-A-89/09678
- DD-A- 135 462
- DE-A- 1 803 448
- DE-A- 2 115 084

## Beschreibung

Die Erfindung betrifft eine Abstreifeinrichtung für eine aus mehreren Abdeckkästen bestehende Teleskopabdeckung, enthaltend
a) eine aus starrem Material bestehende, mit einem Abdeckkasten verbindbare Trägerleiste,
b) einen aus elastischem Material bestehenden, mit der Trägerleiste verbundenen Abstreifer, dessen vordere Kante durch eine Abstreiflippe gebildet wird,
c) sowie einen an der Rückseite der Abstreifeinrichtung vorgesehenen Puffer aus elastischem Material, der die Verformbarkeit des Puffermateriales vergrößernde Ausnehmungen aufweist.

Eine Abstreifeinrichtung der vorstehend genannten Gattung ist durch Fig.17 der WO-A-89/09678 bekannt. Der Puffer enthält hierbei an seiner Ober- und Unterseite je eine in Längsrichtung des Abstreifers verlaufende, nach außen hin offene Ausnehmung.

Die Abdeckkästen einer Teleskopabdeckung bewegen sich im Betrieb mit dem beweglichen Maschinenteil einer mit der Teleskopabdeckung ausgerüsteten Werkzeugmaschine. Dabei treffen die einzelnen Abdeckkästen jeweils am Ende ihres Bewegungshubes aufeinander, wobei die Anschlagbewegung durch Puffer gedämpft wird, um die Geräuschentwicklung, den Verschleiß und insbesondere mechanische Rückwirkungen auf die vielfach hochempfindliche Werkzeugmaschine möglichst zu verringern.

Da einerseits im Zuge der Leistungssteigerung moderner Werkzeugmaschinen die Verfahrgeschwindigkeiten immer weiter vergrößert werden, andererseits jedoch auch die Empfindlichkeit von Präzisionswerkzeugmaschinen (beispielsweise von Schleifmaschinen) gegenüber äußeren Erschütterungen zunimmt, kommt der Dämpfung der Anschlagbewegung der Abdeckkästen der Teleskopabdeckung besondere Bedeutung zu.

Die zweckentsprechende Gestaltung der für diese Dämpfung eingesetzten Puffer wird dadurch erschwert, daß die Länge der Teleskopabdeckung im zusammengedrückten Zustand möglichst klein gehalten werden muß. Zur Unterbringung der Puffer steht infolgedessen nur ein sehr kleiner Bauraum (insbesondere in Längsrichtung der Teleskopabdeckung) zur Verfügung, was die Erzielung eines ausreichenden Dämpfungsweges schwierig macht.

Der Erfindung liegt daher die Aufgabe zugrunde, eine Abstreifeinrichtung der eingangs genannten Gattung so auszubilden, daß trotz eines sehr kleinen, für die Unterbringung der Puffer benötigten Bauraumes ein vergleichsweise großer Dämpfungsweg und damit eine besonders gute Geräusch- und Stoßdämpfung erzielt wird.

Diese Aufgabe wird erfindungsgemäß dadurch gelöst, daß die Ausnehmungen durch Hohlräume gebildet werden, die als senkrecht zur Längsrichtung des Abstreifers verlaufende Durchgangslöcher ausgebildet sind.

Zweckmäßige Ausgestaltungen der Erfindung sind Gegenstand der Unteransprüche.

Durch die erfindungsgemäß im Puffer vorgesehenen, als senkrecht zur Längsrichtung des Abstreifers verlaufende Durchgangslöcher ausgebildeten Hohlräume wird die Verformbarkeit des Puffermateriales insbesondere in Bewegungsrichtung des Abdeckkastens wesentlich vergroßert. Durch derartige Hohlräume läßt sich auch bei einer sehr geringen Erstreckung des Puffers in Bewegungsrichtung des Abdeckkastens ein vergleichsweise großer Dämpfungsweg und damit eine für die Geräusch- und Stoßdämpfung besonders günstige, weiche und positiv ansteigende Dämpfungswirkung erzielen.

Die im Puffer vorgesehenen Hohlräume gestatten dem Puffermaterial ein Ausweichen in unterschiedlichen Richtungen und vergrößern damit die dämpfungswirksame innere Reibung.

Einige Ausführungsbeispiele der Erfindung sind in der Zeichnung veranschaulicht. Es zeigen
- Fig.1: eine Aufsicht auf ein erstes Ausführungsbeispiel der Erfindung,
- Fig.2: einen Schnitt (längs der Linie II-II) durch die Abstreifeinrichtung gemäß Fig.1,
- Fig.3 bis 9: Darstellungen weiterer Ausführungsbeispiele der Erfindung.

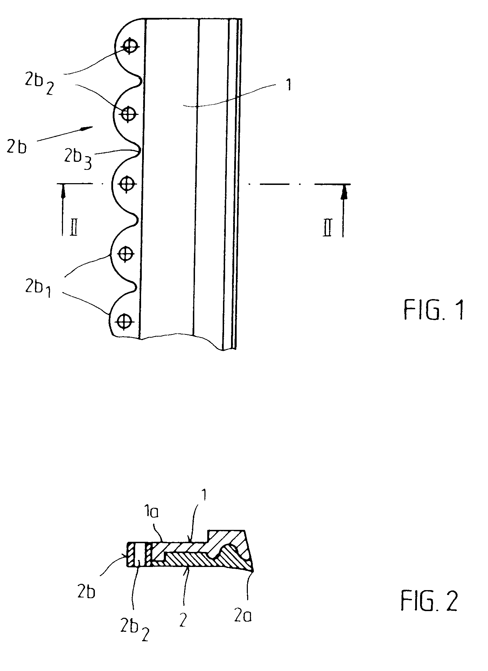

Die in den Fig. 1 und 2 veranschaulichte Abstreifeinrichtung für eine aus mehreren Abdeckkästen bestehende, nicht veranschaulichte Teleskopabdeckung besteht im wesentlichen aus einer Trägerleiste 1 und einem Abstreifer 2.

Die Trägerleiste 1 besteht aus starrem Material und wird längs ihrer mit la bezeichneten Oberseite mit einem Abdeckkasten verbunden. Beispiele für mögliche Verbindungsarten werden anhand der Fig.11 und 12 erläutert.

Der Abstreifer 2 besteht aus elastischem Material und ist mit der Trägerleiste 1 verbunden. Beim dargestellten Ausführungsbeispiel ist eine feste Verbindung, vorzugsweise durch Vulkanisation, zwischen dem Abstreifer 2 und der Trägerleiste 1 vorgesehen. Eine lösbare Verbindungsart wird anhand von Fig.13 erläutert.

Der Abstreifer 2 weist im Bereich seiner in Bewegungsrichtung vorderen Kante eine Abstreiflippe 2a auf, mit der der Abstreifer 2 auf der Deckwand des nächstkleineren Abdeckkastens gleitet.

An der Rückseite der Abstreifeinrichtung ist ein Puffer 2b aus elastischem Material vorgesehen. Bei dem in den Fig.1 und 2 veranschaulichten Ausführungsbeispiel bildet der Puffer 2b einen Teil des einstückig hergestellten Abstreifers 2.

Der Puffer 2b enthält an seiner zum Anschlag mit dem nächstkleineren Abdeckkasten kommenden rückwärtigen Stirnfläche eine Vielzahl von mit Abstand voneinander angeordneten Vorsprüngen 2b₁, die eine nach außen konvex gekrümmte, kreisbogenförmige Kontur aufweisen.

Jeder der Vorsprünge 2b₁ ist mit einem Hohlraum 2b₂ versehen, der als Durchgangsloch ausgebildet ist und senkrecht zur Längsrichtung des Abstreifers 2 verläuft.

Trifft im Betrieb der Teleskopabdeckung der Puffer 2b eines Abdeckkastens auf den benachbarten Abdeckkasten, so werden die Vorsprünge 2b₁ elastisch zusammengedrückt und verformt, wobei die Hohlräume 2b₂ zusammen mit den Zwischenräumen 2b₃ zwischen benachbarten Vorsprüngen 2b₁ einen verhältnismäßig großen Dämpfungsweg und eine weiche, sich progressiv verstärkende Dämpfung ergeben.

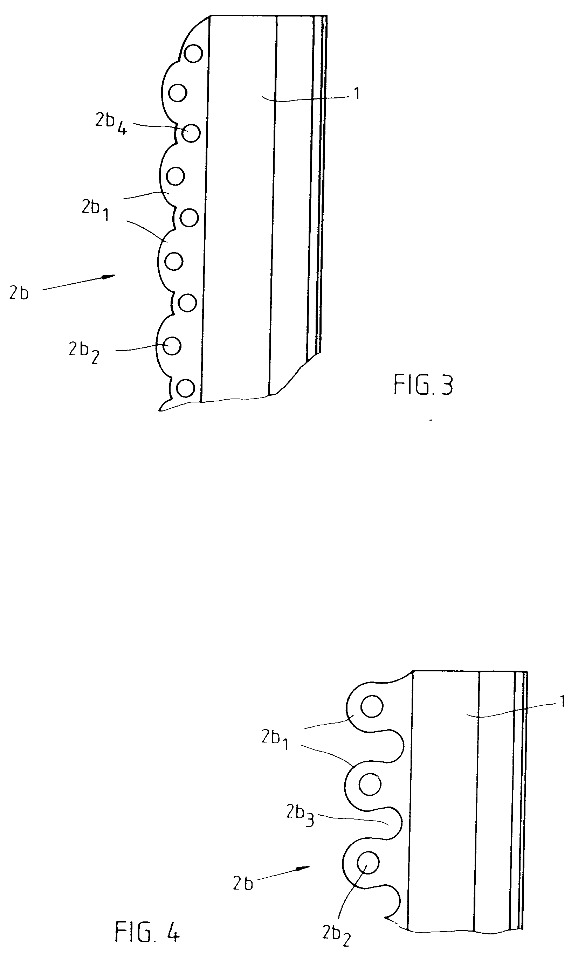

Bei dem in Fig.3 dargestellten Ausführungsbeispiel entspricht die rückwärtige Kontur des Puffers 2b im wesentlichen der des Ausführungsbeispieles der Fig.1 und 2. Zusätzlich zu den in den Vorsprüngen 2b₁ vorgesehenen Hohlräumen 2b₂ sind jedoch noch weitere Hohlräume 2b₄ im Bereich zwischen benachbarten Vorsprüngen 2b₁ vorgesehen. Diese Hohlräume 2b₄ sind - wie Fig.3 zeigt - in Bewegungsrichtung der Abstreifeinrichtung etwas gegenüber den Hohlräumen 2b₂ versetzt.

Bei dem Ausführungsbeispiel gemäß Fig.4 sind die Vorsprünge 2b₁ des Puffers 2b stärker als bei den bisher erläuterten Ausführungsbeispielen ausgeprägt. Ihre teilzylindrische Außenkontur erstreckt sich über einen Umfangswinkel von mehr als 180°. Entsprechend tief sind die Zwischenräume 2b₃ zwischen benachbarten Vorsprüngen 2b₁. Wie beim Ausführungsbeispiel gemäß den Fig.1 und 2 ist auch bei der Anordnung nach Fig.4 in jedem Vorsprung 2b₁ jeweils ein Hohlraum 2b₂ vorgesehen.

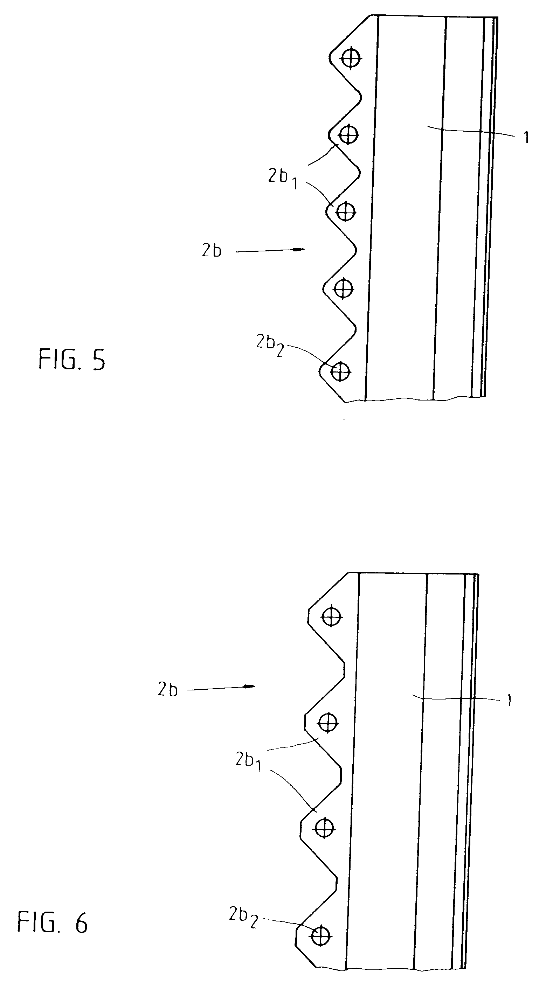

Bei dem in Fig.5 veranschaulichten Ausführungsbeispiel besitzen die Vorsprünge 2b₁ des Puffers 2b eine etwa dreieckförmige Kontur, wobei die rückwärtigen Dreiecksspitzen leicht gerundet sind. In den Vorsprüngen 2b₁ ist jeweils ein Hohlraum 2b₂ vorgesehen.

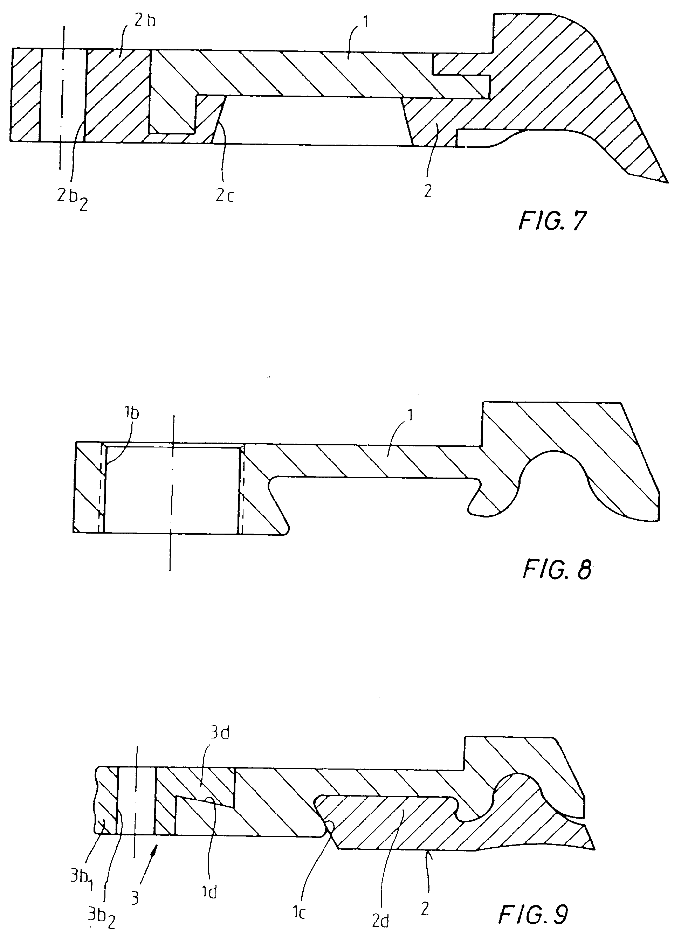

Fig.6 zeigt eine Variante der Ausführung gemäß Fig.5. Die Vorsprünge 2b₁ sind hierbei an ihrer rückwärtigen Seite abgeplattet.

Die Befestigung der Trägerleiste 1 am Abdeckkasten kann beispielsweise durch eine Punktschweißverbindung erfolgen. Fig.7 zeigt eine solche, für eine Punktschweißbefestigung bestimmte Abstreifeinrichtung, bestehend aus Trägerleiste 1 und Abstreifer 2 (mit Puffer 2b und darin vorgesehenen Hohlräumen 2b₂). An den Stellen, die für eine Punktschweißverbindung zwischen der Trägerleiste 1 und dem zugehörigen Abdeckkasten bestimmt sind, weist der Abstreifer 2 in bestimmten Abständen über seine Länge verteilt kreisförmige Ausnehmungen 2c auf.

Ist es erwünscht, die Abstreifeinrichtung auf einfache Weise vom zugehörigen Abdeckkasten lösen zu können, so kann eine Schraubbefestigung gewählt werden. Fig.8 veranschaulicht eine Trägerleiste 1, die zu diesem Zweck mit Gewindebohrungen 1b versehen ist. Diese Gewindebohrungen dienen zur Aufnahme von Befestigungsschrauben, die zur Verbindung der Abstreifeinrichtung mit dem zugehörigen Abdeckkasten bestimmt sind.

Während bei den bisher erläuterten Ausführungsbeispielen der Puffer 2b jeweils einen Teil des einstückig hergestellten Abstreifers 2 bildet, ist es im Rahmen der Erfindung auch möglich, den Puffer als einen vom Abstreifer gesonderten Teil auszubilden.

Fig.9 zeigt ein derartiges Ausführungsbeispiel. Der Puffer 3 ist hierbei gesondert vom Abstreifer 2 ausgebildet, was beispielsweise den Vorteil hat, daß der Puffer 3 aus einem gegenüber dem Abstreifer 2 unterschiedlichen Material bestehen kann. So kann für den Abstreifer Material hoher Abriebfestigkeit (bei begrenzter elastischer Verformbarkeit) gewählt werden, während der Puffer aus einem Material hergestellt wird, das bei Druckbeanspruchungen stark verformbar ist und hierbei eine hohe innere Verformungsarbeit aufnimmt, somit stark dämpfend wirkt.

Wie bei den zuvor erläuterten Ausführungsbeispielen ist auch bei der Variante gemäß Fig.9 der Puffer 3 mit Vorsprüngen (z. B. 3b₁) und Hohlräumen (3b₂) versehen.

Im Rahmen der Erfindung kann der Abstreifer 2 fest, vorzugsweise durch Vulkanisation, mit der Trägerleiste 1 verbunden werden. Statt dessen ist es jedoch im Rahmen der Erfindung auch möglich, eine elastische Formschlußverbindung zwischen dem Abstreifer und der Trägerleiste vorzusehen.

Fig.9 zeigt auch diese Variante: Der Abstreifer 2 ist mit seinem Hauptteil 2d in einer schwalbenschwanzförmigen Nut 1c der Trägerleiste 1 formschlüssig aufgenommen und gehalten. Der Puffer 3 ist gleichfalls mit einem Halterungsteil 3d in einer hinterschnittenen Ausnehmung 1d des Trägerteiles 1 formschlüssig, jedoch lösbar befestigt.

Es versteht sich, daß eine derartige lösbare Formschlußverbindung zwischen Abstreifer 2 (mit Puffer 2b) und Trägerleiste 1 auch bei allen anderen zuvor erläuterten Ausführungsbeispielen möglich ist.

## Patentansprüche

1. Abstreifeinrichtung für eine aus mehreren Abdeckkästen bestehende Teleskopabdeckung, enthaltend
a) eine aus starrem Material bestehende, mit einem Abdeckkasten verbindbare Trägerleiste (1),
b) einen aus elastischem Material bestehenden, mit der Trägerleiste (1) verbundenen Abstreifer (2), dessen vordere Kante durch eine Abstreiflippe (2a) gebildet wird,
c) sowie einen an der Rückseite der Abstreifeinrichtung vorgesehenen Puffer (2b) aus elastischem Material, der die Verformbarkeit des Puffermateriales vergrößernde Ausnehmungen aufweist,
dadurch gekennzeichnet, daß
d) die Ausnehmungen durch Hohlräume (2b₂) gebildet werden, die als senkrecht zur Längsrichtung des Abstreifers (2) verlaufende Durchgangslöcher ausgebildet sind.

2. Abstreifeinrichtung nach Anspruch 1, dadurch gekennzeichnet, daß der Puffer (2b) an seiner zum Anschlag mit dem nächstkleineren Abdeckkasten kommenden rückwärtigen Stirnfläche eine Vielzahl von mit Abstand voneinander angeordneten Vorsprüngen (2b₁) aufweist, wobei jeder Vorsprung mit wenigstens einem Hohlraum (2b₂) versehen ist.

3. Abstreifeinrichtung nach Anspruch 2, dadurch gekennzeichnet, daß im Bereich zwischen benachbarten Vorsprüngen (2b₁) zusätzliche Hohlräume (2b₄) vorgesehen sind.

4. Abstreifeinrichtung nach Anspruch 1, dadurch gekennzeichnet, daß der Puffer (2b) einen Teil des einstückig hergestellten Abstreifers (2) bildet.

5. Abstreifeinrichtung nach Anspruch 1, dadurch gekennzeichnet, daß der Puffer (3) als ein vom Abstreifer (2) gesonderter Teil ausgebildet ist.

6. Abstreifeinrichtung nach Anspruch 1, dadurch gekennzeichnet, daß der Abstreifer (2) fest, vorzugsweise durch Vulkanisation, mit der Trägerleiste (1) verbunden ist.

7. Abstreifeinrichtung nach Anspruch 5, dadurch gekennzeichnet, daß der Puffer (3) über eine elastische Formschlußverbindung mit der Trägerleiste (1) verbunden und unabhängig vom Abstreifer (2) von der Trägerleiste (1) lösbar ist.

8. Abstreifeinrichtung nach Anspruch 5, dadurch gekennzeichnet, daß der Puffer (3) aus einem gegenüber dem Abstreifer (2) unterschiedlichen Material besteht.

9. Abstreifeinrichtung nach Anspruch 1, dadurch gekennzeichnet, daß die Trägerleiste (1) Gewindebohrungen (1b) zur Aufnahme von Befestigungsschrauben aufweist, die zur Verbindung der Abstreifeinrichtung mit dem zugehörigen Abdeckkasten bestimmt sind.

10. Abstreifeinrichtung nach Anspruch 1, dadurch gekennzeichnet, daß der Abstreifer (2) Ausnehmungen (2c) an Stellen aufweist, die für eine Punktschweißverbindung der Trägerleiste (1) mit dem zugehörigen Abdeckkasten bestimmt sind.

## Claims

1. Scraper arrangement for a telescopic cover consisting of several cover boxes, comprising
a) a carrier strip (1) which is made from rigid material and can be connected to a cover box,
b) a scraper (2) which is made from flexible material and connected to the carrier strip (1), the front edge of the scraper being formed by a scraper lip (2a),
c) and a buffer (2b) provided on the rear face of the scraper arrangement and made from flexible material which has spaces which increase the deformability of the buffer material,
characterised in that
d) the spaces are formed by cavities (2b₂) which are constructed as through bores which run perpendicular to the longitudinal direction of the scraper (2).

2. Scraper arrangement as claimed in claim 1, characterised in that the buffer (2b) has a number of projections (2b₁) arranged spaced from one another on its rear end face which comes to a stop with the next smaller cover box, each projection being provided with at least one cavity (2b₂).

3. Scraper arrangement as claimed in claim 2, characterised in that additional cavities (2b₄) are provided in the region between neighbouring projections (2b₁).

4. Scraper arrangement as claimed in claim 1, characterised in that the buffer (2b) forms a part of the integrally produced scraper (2).

5. Scraper arrangement as claimed in claim 1, characterised in that the buffer (3) is constructed as a separate part from the scraper (2).

6. Scraper arrangement as claimed in claim 1, characterised in that the scraper (2) is firmly connected, preferably by vulcanisation, to the carrier strip (1).

7. Scraper arrangement as claimed in claim 5, characterised in that the buffer (3) is connected to the carrier strip (1) by means of an elastic form-locking connection and is releasable from the carrier strip (1) independently of the scraper (2).

8. Scraper arrangement as claimed in claim 5, characterised in that the buffer (3) is made from a different material from the scraper (2).

9. Scraper arrangement as claimed in claim 1, characterised in that the carrier strip (1) has tapholes (1b) to receive fixing screws which are intended for connecting the scraper arrangement to the appertaining cover box.

10. Scraper arrangement as claimed in claim 1, characterised in that the scraper (2) has recesses (2c) at points which are intended for a spot-welded connection of the carrier strip (1) to the appertaining cover box.

## Revendications

1. Dispositif racleur destiné à une chape télescopique de protection se composant de plusieurs caissons de couverture, comprenant :
a) une baguette de support (1) en matière rigide, se reliant à un caisson de couverture,
b) une racle (2) de matière élastique qui est reliée à la baguette de support (1) et dont le bord antérieur est formé d'une languette de raclage (2a),
c) ainsi qu'un amortisseur (2b) de matière élastique qui est prévu sur le côté arrière du dispositif racleur et qui comporte des évidements qui accroissent la déformabilité de la matière de l'amortisseur,
caractérisé en ce que
d) les évidements sont formés de cavités (2b₂) qui sont conformées en trous de traversée qui sont perpendiculaires à la direction de la longueur de la racle (2).

2. Dispositif racleur selon la revendication 1, caractérisé en ce que l'amortisseur (2b) comporte, sur la surface extrême arrière qui entre en butée avec le caisson de couverture ayant les plus faibles dimensions suivantes, de multiples protubérances (2b₁) qui sont disposées à distance les unes des autres, chaque protubérance comportant au moins une cavité (2b₂).

3. Dispositif racleur selon la revendication 2, caractérisé en ce que des cavités supplémentaires (2b₄) sont prévues entre protubérances voisines (2b₁).

4. Dispositif racleur selon la revendication 1, caractérisé en ce que l'amortisseur (2b) fait partie d'une racle (2) réalisée en une pièce.

5. Dispositif racleur selon la revendication 1, caractérisé en ce que l'amortisseur (3) est conformé en une pièce séparée de la racle (2).

6. Dispositif racleur selon la revendication 1, caractérisé en ce que la racle (2) est solidarisée avec la baguette de support (1), de préférence par vulcanisation.

7. Dispositif racleur selon la revendication 5, caractérisé en ce que l'amortisseur (3) est relié à la baguette de support (1) par une liaison élastique à complémentarité de formes et peut être enlevé de la baguette de support (1) indépendamment de la racle (2).

8. Dispositif racleur selon la revendication 5, caractérisé en ce que l'amortisseur (3) est en une matière différente que celle de la racle (2).

9. Dispositif racleur selon la revendication 1, caractérisé en ce que la baguette de support (1) comporte des trous taraudés (1b) de logement de vis de fixation qui sont destinées à relier le dispositif racleur au caisson de couverture correspondant.

10. Dispositif racleur selon la revendication 1, caractérisé en ce que la racle (2) comporte des évidements (2c) en des emplacements qui sont destinés à un assemblage par soudage par points de la baguette de support (1) avec le caisson de couverture correspondant.
